# FASCICULE DE BREVET EUROPEEN

(11) **EP 3 368 376 B1**
(45) Date de publication et mention de la délivrance du brevet: **28.08.2019**
(21) Numéro de dépôt: 16798238.8
(22) Date de dépôt: 17.10.2016
(51) Int. Cl.: B60R 7/04, B60N 2/75

(54) **CONSOLE MUNIE D'ACCOUDOIRS ARTICULES COMPRENANT UN MECANISME DE DEVERROUILLAGE PERFECTIONNE**
KONSOLE MIT EINEM SCHWENKBAREN ARMLEHNE MIT EINEM VERBESSERTER ENTRIEGELUNGSMECHANISM
CONSOLE PROVIDED WITH ARTICULATED ARM RESTS, COMPRISING AN IMPROVED UNLOCKING MECHANISM

(30) Priorité: 28.10.2015 FR 1560305
(43) Date de publication de la demande: 05.09.2018
(73) Titulaire: PSA AUTOMOBILES S.A., 78300 Poissy (FR)
(72) Inventeur: LACOSTE, Arnaud, 91400 Orsay (FR)
(86) Numéro de dépôt international: PCT/FR2016/052679
(87) Numéro de publication internationale: WO 2017/072426

(56) Documents cités:
- EP-A1- 0 848 126
- EP-A1- 1 048 516
- EP-A2- 0 587 014
- US-A- 5 732 994
- US-A- 5 810 434

## Description

L'invention concerne une console munie d'accoudoirs articulés, possédant un mécanisme de déverrouillage destiné à assurer le pivotement d'accoudoirs afin d'accéder à un réceptacle permettant la dépose d'objets.

Il est connu de réaliser des consoles comportant des couvercles pour accéder à un réceptacle. Généralement, ces couvercles ont leur axe de pivotement disposé sur la largeur de la bordure arrière. Le document FR2877614 décrit une console dont les couvercles sont montés sur les bords longitudinaux. La console comprend un corps fixe, et un accoudoir articulé en rotation sur le corps autour d'un axe de réglage, de façon à pouvoir prendre au moins deux positions stables de réglage en hauteur d'appui. L'accoudoir comprend de ce fait au moins deux surfaces d'appui distinctes, inclinées l'une par rapport à l'autre autour de l'axe de réglage, et qui définissent sélectivement des appuis dans les positions stables respectives, à des hauteurs différentes par rapport à l'axe de réglage. Ces accoudoirs sont manoeuvrés à la main et ne disposent pas d'un mécanisme permettant leur pivotement Le document US5810434 A décrit une console d'habitacle selon le préambule de la revendication 1.

L'invention a pour objectif de pallier ces inconvénients en proposant une console équipée de couvercles dont l'ouverture est effectuée automatiquement par un simple appui sur un bouton poussoir disposé à l'extrémité avant de la console.

A cet effet l'invention propose une console d'habitacle pour un véhicule comportant un réceptacle et au moins un accoudoir articulé sur la bordure du cadre du dit réceptacle, l'accoudoir étant verrouillé pour obturer la console, et comprenant un mécanisme monté sur un support solidaire du cadre associé à un élément de commande apte à coopérer par contact direct avec un élément de déverrouillage de l'accoudoir, et en ce que l'élément de commande du mécanisme intègre un bouton poussoir monté entre une extrémité des bras de levier, l'autre extrémité comportant un fourreau apte à pivoter autour d'un axe relié au support.

Selon une variante, l'élément de commande pivote autour d'un axe médian sensiblement vertical.

Selon un autre mode de réalisation de l'invention, l'élément de commande comporte un talon constitué par un prolongement du bras de levier à angle droit fournissant une butée positive sous l'effort d'un ressort de compression pour disposer le bouton poussoir dans une position de service.

De manière optionnelle, l'élément de déverrouillage du mécanisme est constitué des bras de leviers à l'extrémité desquelles sont façonnés des pênes solidarisés sur un axe horizontal articulé dans des paliers du support.

Selon un mode de réalisation préféré de l'invention, l'élément de déverrouillage comporte un ressort en épingle dont une branche est en tension sur un bord du support et à l'arrière deux branches viennent en appui sur la tranche des bras des leviers maintenant les pênes en saillie.

Selon une variante, l'extrémité des pênes est arrondie.

Avantageusement, l'élément de déverrouillage pivote autour d'un axe médian sensiblement vertical.

Selon une variante, l'élément de commande est actionné par le bouton poussoir dont le bord interne vient coopérer en contact direct sur la tranche des bras des leviers des pênes de l'élément de déverrouillage qui pivotent et dégagent les pênes des accoudoirs provoquant leur ouverture.

Selon une autre variante, la console comporte deux accoudoirs affleurant sur son axe médian.

L'invention concerne également un véhicule comportant un réceptacle et au moins un accoudoir articulé et verrouillé, ayant les caractéristiques susmentionnées.

L'invention sera bien comprise et d'autres aspects et avantages apparaîtront clairement à la lecture de la description qui suit donnée à titre d'exemple par rapport aux figures annexées sur lesquelles :
- la figure 1 présente une vue en perspective de la partie supérieure de la console dont les couvercles sont verrouillés en position de fermeture ;
- la figure 2 présente une vue en perspective de la partie supérieure de la console dont les couvercles sont verrouillés en position d'ouverture;
- la figure 3 présente une vue en perspective de la partie supérieure de la console dont le couvercle de droite est en position d'ouverture tandis que le couvercle de gauche est en position de fermeture ;
- la figure 4 présente une vue en perspective de la partie supérieure de la console dont le couvercle de gauche est en position d'ouverture tandis que le couvercle de droite est en position de fermeture ;
- la figure 5 présente une vue de dessus partielle de la console au niveau du mécanisme de commande de déverrouillage ;
- la figure 6 présente une vue en perspective partielle de la console au niveau du mécanisme de commande de déverrouillage ;
- la figure 7 présente une vue de profil en coupe partielle de la console au niveau du mécanisme de commande de déverrouillage, dans une position du couvercle verrouillé ;
- la figure 8 présente une vue de profil partielle en coupe suivant l'axe de la console au niveau du mécanisme de commande de déverrouillage, dans une position du couvercle verrouillé ;
- la figure 9 présente une vue de profil partielle en coupe du mécanisme de commande de déverrouillage, dans une position du couvercle déverrouillé ;
- la figure 10 présente une vue arrière partielle en coupe du mécanisme de commande de déverrouillage;
- la figure 11 présente une vue en perspective de la console dans sa configuration d'utilisation entre les deux sièges.

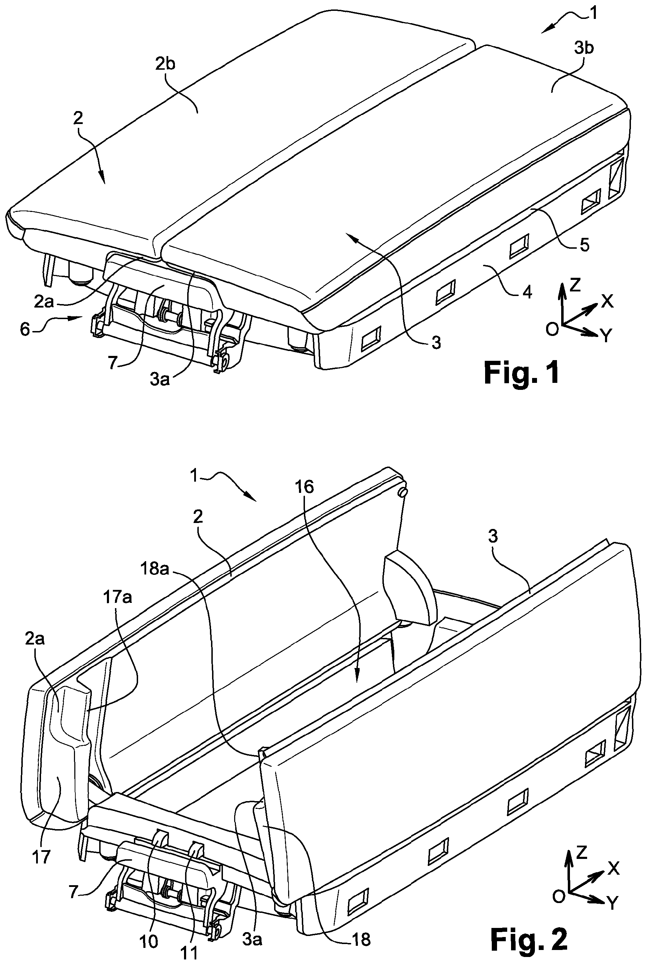

La figure 1 présente une vue en perspective de la partie supérieure de la console 1 dont les accoudoirs 2, 3 formant des couvercles pour fournir l'accès à un réceptacle, sont verrouillés en position de fermeture. La partie supérieure de la console 1 est constituée d'un cadre 4 rectangulaire sur lequel les accoudoirs 2, 3 sont reliés par une charnière sur les bords longitudinaux 5 dudit cadre 4. Les accoudoirs 2, 3 ont une forme rectangulaire recouverts d'un garnissage 2b, 3b d'une épaisseur suffisante pour assurer un appui du coude confortable pour l'utilisateur. Les accoudoirs 2, 3 ont une largeur adaptée de manière à ce que les bords des extrémités libres soient jointifs sur l'axe longitudinal de la console 1. L'extrémité avant de la console 1 comporte un mécanisme 6 de déverrouillage compact implanté sur la bordure du cadre 4. Ce mécanisme 6 permet de verrouiller automatiquement les accoudoirs 2, 3 lorsqu'ils sont rabattus manuellement en position horizontale. Un bouton poussoir 7 allongé lié au mécanisme 6 est coulissant dans des ouvertures 2a, 3a du rebord d'extrémité des accoudoirs 2, 3. Le mécanisme 6 est compact en largeur de manière à limiter l'excroissance dans le sens de la longueur de la console 1 et de favoriser le montage du cadre 4 équipé du mécanisme 6 sur la structure de la console 1, afin de fournir un accès considérable à l'intérieur de la console 1.

La figure 2 présente une vue en perspective de la partie supérieure de la console 1 dont les couvercles sont montrés en position d'ouverture afin d'accéder au réceptacle 16. Un appui sur le bouton poussoir 7 coulissant dans les dégagements 2a, 3a permet simultanément de déverrouiller les accoudoirs 2, 3 par dégagement des pênes 10, 11 des logements 17a, 18a ménagés dans les rebords 17, 18 des dits accoudoirs 2, 3. Les accoudoirs 2, 3 disposent sur leurs axes de rotation d'un ressort à spirales (non représenté) permettant le pivotement automatique des accoudoirs 2, 3 lorsqu'ils sont déverrouillés et par conséquent fournissant l'accès au réceptacle 16.

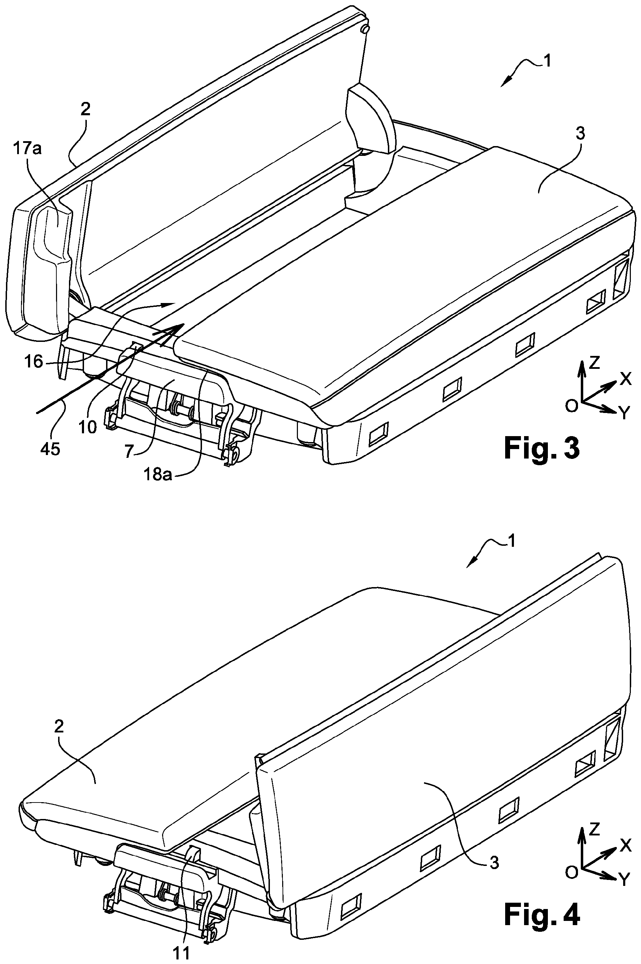

La figure 3 présente une vue en perspective de la partie supérieure de la console 1 dont le couvercle 2 de droite est en position d'ouverture tandis que le couvercle 3 de gauche est en position de fermeture. Cette configuration est possible lorsqu'un appui est réalisé sur l'accoudoir 3 qui doit rester verrouillé, par exemple en laissant le coude sur l'accoudoir 3. Dans ce cas, un appui sur le bouton poussoir 7 déverrouille les pênes 10, 11 en les repoussant suivant la flèche 45 hors des logements 17a, 18a des accoudoirs 2, 3. Un ressort de rappel (non visible) permet de replacer les pênes 10, 11 et le bouton poussoir 7 dans leur position initiale.

La figure 4 présente une vue en perspective de la partie supérieure de la console 1 dont le couvercle 3 de gauche est en position d'ouverture tandis que le couvercle 2 de droite est en position de fermeture. Cette configuration est inverse de la configuration décrite à la figure 3 suivant le même principe de fonctionnement. L'appui du coude dans ce cas est effectué sur l'accoudoir 2 de droite.

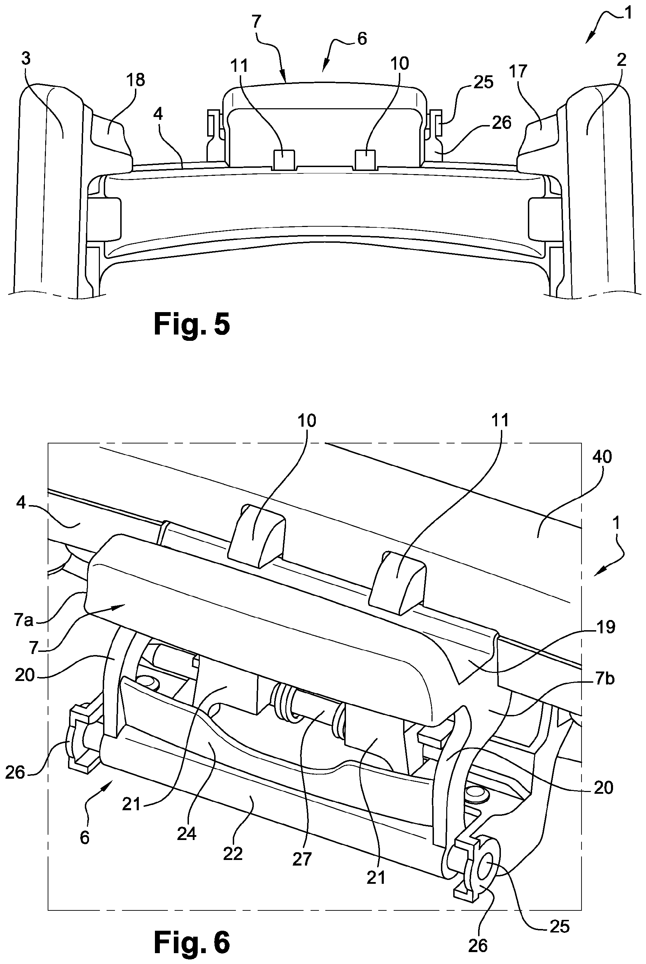

La figure 5 présente une vue de dessus partielle de la console 1 au niveau du mécanisme 6 de commande de déverrouillage. Le mécanisme 6 est conçu de manière à occuper un espace réduit notamment dans le sens longitudinal. Les éléments constitutifs du mécanisme 6 ne débordent pas de l'enveloppe du bouton poussoir 7, seul l'axe 25 de fixation du dit bouton poussoir 7, dépasse de chaque côté pour se fixer sur un support 26 solidaire du cadre 4 de la console 1. Les pênes 10, 11 sont intégrés dans le cadre 4 et se présente en saillie au-dessus du bouton poussoir 7. Les rebords 17, 18 des accoudoirs 2, 3 sont adaptés pour affleurer le bord du cadre 4 et verrouiller les logements prévus à cet effet.

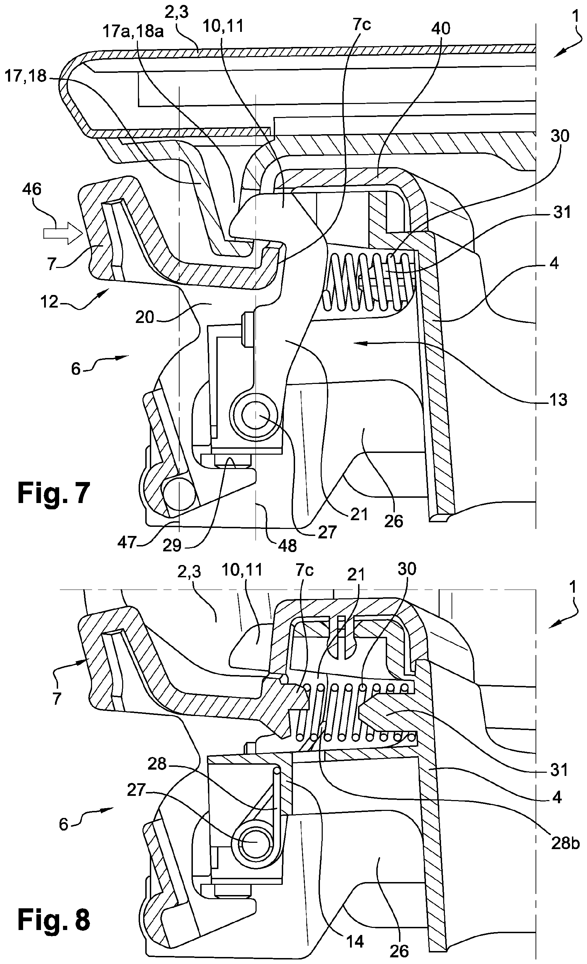

La figure 6 présente une vue en perspective partielle de la console 1 au niveau du mécanisme 6 de commande de déverrouillage. Sur la vue, on voit que le bouton poussoir 7 comporte une rainure 19 parallèle au cadre 4, notamment, le dessus du rebord de cette rainure 19 coulissant dans l'ouverture du cadre 4 affleure sous l'extrémité des pênes 10, 11. La rainure permet de recevoir le bord des accoudoirs 2, 3 lors de leurs fermetures. La bordure des accoudoirs 2, 3 permet d'effacer les pênes 10, 11 qui sont en saillie sous l'action d'un ressort en épingle, en exerçant une force sur leur partie supérieure arrondie. Le mécanisme 6 comprend deux paires de bras 20, 21 de leviers montés sensiblement verticalement, soit une paire 20 de bras de leviers reliés au bouton poussoir 7 et une paire de bras de leviers 21 reliés aux pênes 10, 11.
En premier plan, la paire de bras 20 de leviers courbés est relié à une extrémité à un fourreau 22 d'axe horizontal et à l'autre extrémité à chaque bout 7a, 7b du bouton poussoir 7. Une entretoise 24 de rigidification est solidaire du fourreau 22 et des bras 20 de leviers courbés. Un axe 25 traverse le fourreau 22 pour venir en prise à chacune des extrémités dudit fourreau 22 dans deux alésages ménagés dans des supports 26 solidaires du cadre 4 de la console 1. En arrière-plan, on voit les bras 21 de leviers des pênes 10, 11 montés sur un axe horizontal 27. Un ressort 28 (visible fig 8) de rappel en épingle est également monté sur l'axe 27 entre les bras 21 de leviers de manière à maintenir les pênes 10, 11 constamment en saillie. Le fourreau 22 est disposé à l'aplomb de l'avant du bouton poussoir 7. Les bras 20 de leviers se raccordent verticalement sur le fourreau 22 puis se prolongent suivant une courbe pour se raccorder de chaque côté et à l'arrière du bouton poussoir 7. Un enjoliveur 40 recouvre le dessus du cadre 4 au niveau du mécanisme 6 laissant apparaître les pênes 10, 11 en saillie.

La figure 7 présente une vue de profil en coupe partielle de la console 1 au niveau du mécanisme compact 6 de commande de déverrouillage, dans une position d'un accoudoir 2, 3 verrouillé. Le mécanisme compact 6 monté sur un support 26 solidaire du cadre 4 comporte un élément de commande 12 comprenant le bouton poussoir 7 apte à coopérer avec un élément de déverrouillage 21 de l'accoudoir 2, 3 comprenant les pênes 10, 11. L'élément de commande 12 et l'élément de déverrouillage 13 pivotent autour d'un axe médian 47, 48 sensiblement vertical. La course du bouton poussoir 7 est limitée à la butée positive 29 qui appuie sur une portée du support 26 par l'intermédiaire d'une butée élastomère. La butée positive 29 est un talon constitué par un prolongement du bras de levier 20 à angle droit autour du fourreau 22. Le bouton poussoir 7 est maintenu en position de service sous l'effet du ressort de compression 30. Le ressort de compression 30 est monté sur un plot 31 fixé sur le cadre 4 et vient en appui sur le bord interne 7c du bouton poussoir 7. Les bras 21 de leviers associés aux pênes 10, 11 pivotent autour de l'axe 27. Les pênes 10, 11 viennent en prise dans des logements 17a, 18a des rebords 17, 18 des accoudoirs 2, 3. Un enjoliveur 40 monté sur le cadre 4 permet de présenter une bonne qualité perçue. On comprend qu'un appui sur le bouton poussoir 7 suivant la flèche 46 assure le pivotement du bras 20 de leviers dont le bord interne 7c du bouton poussoir 7 vient en appui sur la tranche des bras 21 des leviers des pênes 10, 11 qui pivotent autour de l'axe 27, et dégagent les pênes 10, 11 des logements 17a, 18a des accoudoirs 2, 3 provoquant leur relevage automatiquement s'ils ne sont retenus. Dans le cas où ils sont retenus, le relâchement du bouton poussoir 7 libère les pênes 10, 11 qui se réengagent dans les logements 17a, 18a des accoudoirs 2, 3.

La figure 8 présente une vue de profil partielle en coupe suivant l'axe de la console 1 au niveau du mécanisme 6 de commande de déverrouillage, dans une position de l'accoudoir 2, 3 verrouillé. Le ressort de compression 30 est monté sur le plot 31 solidaire du cadre 4 à une extrémité et vient se centrer sur un têton venu de matière avec le bord interne 7c du bouton poussoir 7 de manière à le maintenir en position reculée de service. Le ressort 28 de rappel en épingle monté sur l'axe 27 comporte une branche 28c (non représentée) en appui sur le support 26 tandis que deux autres branches 28b viennent en appui sur la tranche des bras 21 des leviers des pênes 10, 11 de manière à maintenir les pênes 10, 11 constamment en saillie et en prise dans les accoudoirs 2, 3.

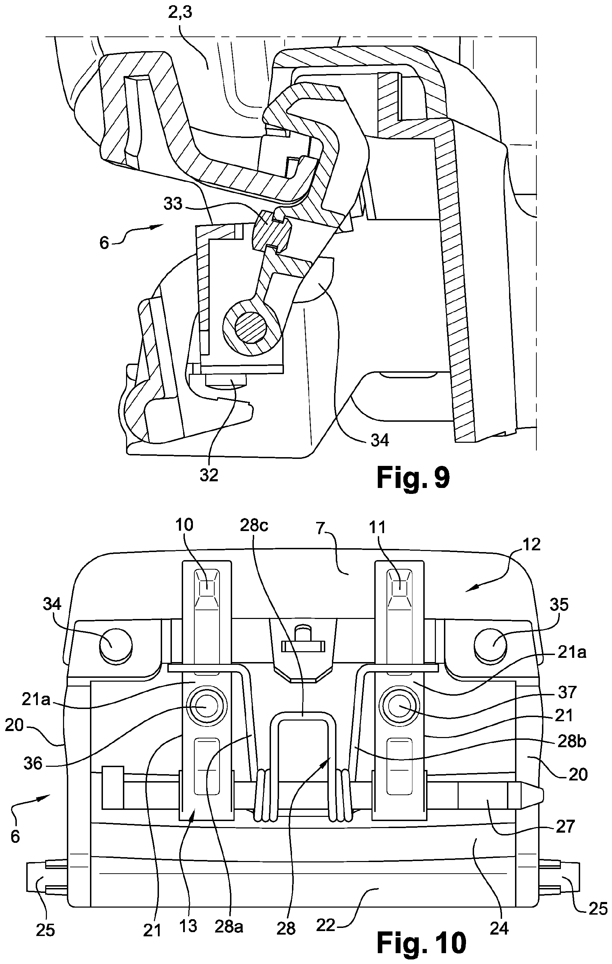

La figure 9 présente une vue de profil partielle en coupe du mécanisme 6 de commande de déverrouillage, dans une position du couvercle 2, 3 déverrouillé. Sur cette vue, il est montré que toutes les zones de contact sont munies de butées 32, 33, 34 en élastomères afin d'éviter des bruits de chocs ou de contacts des pièces constitutives du mécanisme 6.

La figure 10 présente une vue arrière partielle en coupe du mécanisme 6 de commande de déverrouillage, sur laquelle on voit un premier élément 12 de commande constitué du bouton poussoir 7 solidaire de la paire de bras 20 de leviers courbés est relié à une extrémité à un fourreau 22 d'axe horizontal. L'axe 25 traversant le fourreau 22 vient en prise dans des alésages du support (non représenté). Une entretoise 24 de rigidification est solidaire du fourreau 22 et des bras 20 de leviers courbés. Ce premier élément 12 a une forme générale rectangulaire. En outre, à chaque extrémité du bouton poussoir 7 sont implantées des butées souples 34, 35. Dans l'enveloppe interne du premier élément 12 de commande est inscrit le second élément 13 de déverrouillage. Le second élément 13 de déverrouillage est constitué des bras 21 de leviers à l'extrémité desquelles sont façonnés les pênes 10, 11, solidarisés sur un axe horizontal 27. Le ressort en épingle 28 monté sur l'axe 27 comporte deux branches 28a, 28b qui viennent en appui sur la tranche 21a des bras 21 des leviers des pênes 10, 11 afin d'exercer un effort constant de manière à maintenir les pênes 10, 11 constamment en saillie et en appui sur le bord arrière du bouton poussoir 7. Sur chaque tranche 21a des bras 21 des leviers des pênes 10, 11 sont implantés des butées souples 36, 37.

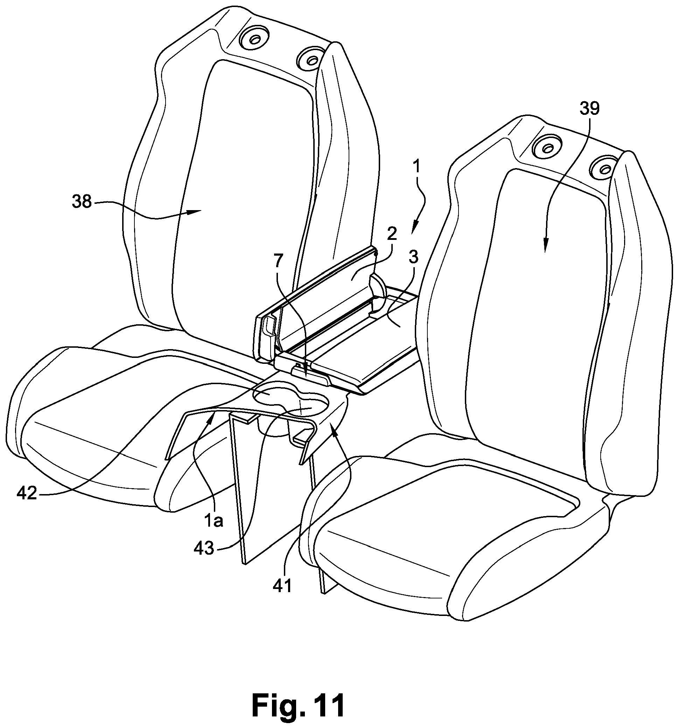

La figure 11 présente une vue en perspective de la console 1 dans sa configuration d'utilisation entre les deux sièges avant 38, 39 du véhicule. Sur la vue, la console centrale la a été tronquée, elle se prolonge normalement jusqu'à la planche de bord. Elle termine vers l'arrière par un bloc 41 comportant deux ouvertures 42, 43 séquentes destinées à réceptionner des contenants tels que par exemple, des cannettes de boisson et se prolonge par la console 1 comprenant les accoudoirs 2, 3. La console 1 est positionnée de manière que l'utilisateur soit à l'aise lorsque son coude est posé sur l'accoudoir 2, 3 et sa main est à proximité de l'avant de la console 1. De ce fait, l'appui sur le bouton poussoir 7 positionné a l'avant de la console 1 est aisé et intuitif pour permettre le pivotement automatique des accoudoirs 2, 3 et l'accès au réceptacle pour y déposer ou retirer des objets. En l'occurrence, sur la figure l'accoudoir 3 est demeuré verrouillé.

l'arrière par un bloc 41 comportant deux ouvertures 42, 43 séquentes destinées à réceptionner des contenants tels que par exemple, des cannettes de boisson et se prolonge par la console 1 comprenant les accoudoirs 2, 3. La console 1 est positionnée de manière que l'utilisateur soit à l'aise lorsque son coude est posé sur l'accoudoir 2, 3 et sa main est à proximité de l'avant de la console 1. De ce fait, l'appui sur le bouton poussoir 7 positionné a l'avant de la console 1 est aisé et intuitif pour permettre le pivotement automatique des accoudoirs 2, 3 et l'accès au réceptacle pour y déposer ou retirer des objets. En l'occurrence, sur la figure l'accoudoir 3 est demeuré verrouillé.

## Revendications

1. Console (1) d'habitacle pour un véhicule comportant un réceptacle (16) et au moins un accoudoir (2, 3) articulé sur la bordure du cadre dudit réceptacle (16), l'accoudoir (2, 3) étant verrouillé pour obturer la console (1), **caractérisé en ce qu'**il comprend un mécanisme compact (6) monté sur un support (26) solidaire du cadre (4) comprenant un élément de commande (12) apte à coopérer par contact direct avec un élément de déverrouillage (13) de l'accoudoir (2, 3), et **en ce que** l'élément de commande (12) du mécanisme (6) intègre un bouton poussoir (7) monté entre une extrémité des bras (20) de levier, l'autre extrémité comportant un fourreau (22) apte à pivoter autour d'un axe (27) relié au support (26) .

2. Console (1) selon la revendication 1, **caractérisé en ce que** l'élément de commande (12) pivote autour d'un axe médian sensiblement vertical (47).

3. Console (1) selon l'une quelconque des revendications 1 ou 2, **caractérisé en ce que** l'élément de commande (12) comporte un talon (29) constitué par un prolongement du bras de levier (20) à angle droit fournissant une butée positive sous l'effort d'un ressort de compression (30) pour disposer le bouton poussoir (7) dans une position de service.

4. Console (1) selon la revendication 1, **caractérisé en ce que** l'élément de déverrouillage (13) du mécanisme est constitué des bras de leviers (21) à l'extrémité desquelles sont façonnés des pênes (10, 11), solidarisés sur un axe horizontal (27) articulé dans des paliers du support (26).

5. Console (1) selon la revendication 4, **caractérisé en ce que** l'élément de déverrouillage (13) comporte un ressort en épingle (28), dont une branche (28c) est en tension sur un bord du support (26) et à l'arrière deux branches (28a, 28b) viennent en appui sur la tranche (21a) des bras (21) des leviers maintenant les pênes (10, 11) en saillie.

6. Console (1) selon l'une quelconque des revendications 4 ou 5, **caractérisé en ce que** l'extrémité des pênes (10, 11) est arrondie.

7. Console (1) selon l'une quelconque des revendications 1 et 4 à 6, **caractérisé en ce que** l'élément de déverrouillage (13) pivote autour d'un axe médian sensiblement vertical (48).

8. Console (1) selon la revendication 1, **caractérisé en ce que** l'élément de commande (12) est actionné par le bouton poussoir (7) dont le bord interne (7c) vient coopérer en contact direct sur la tranche des bras (21) des leviers des pênes (10, 11) de l'élément de déverrouillage (13) qui pivotent et dégagent les pênes (10, 11) des accoudoirs (2, 3) provoquant leurs ouvertures.

9. Console (1) selon l'une quelconque des revendications 1 à 8, **caractérisé en ce qu'**elle comporte deux accoudoirs (2, 3) affleurant sur l'axe médian de la console (1).

10. Véhicule automobile comprenant une console d'habitacle pour un véhicule comportant un réceptacle (16) et au moins un accoudoir (2, 3) articulé et verrouillé, selon l'une quelconque des revendications 1 à 9.

## Patentansprüche

1. Innenraumkonsole (1) für ein Fahrzeug, die eine Aufnahme (16) und mindestens eine Armlehne (2, 3) umfasst, die auf dem Rand des Rahmens der Aufnahme (16) angelenkt ist, wobei die Armlehne (2, 3) verriegelt ist, um die Konsole (1) zu verschließen, **dadurch gekennzeichnet, dass** sie einen kompakten Mechanismus (6) umfasst, der auf einen Träger (26) montiert ist, der fest mit dem Rahmen (4) verbunden ist, der ein Steuerelement (12) umfasst, das geeignet ist, um durch direkten Kontakt mit einem Entriegelungselement (13) der Armlehne (2, 3) zusammenzuwirken, und dass das Steuerelement (12) des Mechanismus (6) einen Druckknopf (7) integriert, der zwischen einem Ende der Hebelarme (20) montiert ist, wobei das andere Ende eine Hülse (22) umfasst, die geeignet ist, um um eine Achse (27), die mit dem Träger (26) verbunden ist, zu schwenken.

2. Konsole (1) nach Anspruch 1, **dadurch gekennzeichnet, dass** das Steuerelement (12) um eine im Wesentlichen vertikale Mittenachse (47) schwenkt.

3. Konsole (1) nach einem der Ansprüche 1 oder 2, **dadurch gekennzeichnet, dass** das Steuerelement (12) einen Absatz (29) umfasst, der aus einer Verlängerung des Hebelarms (20) im rechtem Winkel besteht, der einen positiven Anschlag unter der Einwirkung einer Druckfeder (30) liefert, um den Druckknopf (7) in einer Dienstposition anzuordnen.

4. Konsole (1) nach Anspruch 1, **dadurch gekennzeichnet, dass** das Entriegelungselement (13) des Mechanismus aus Hebelarmen (21) besteht, an deren Ende Riegel (10, 11) ausgestaltet sind, die fest auf einer horizontalen Achse (27), die in den Lagern des Trägers (26) angelenkt ist, verbunden sind.

5. Konsole (1) nach Anspruch 4, **dadurch gekennzeichnet, dass** das Entriegelungselement (13) eine Haarnadelfeder (28) umfasst, von der ein Schenkel (28c) auf einem Rand des Trägers (26) in Spannung ist, und an der Rückseite zwei Schenkel (28a, 28b) auf der Kante (21a) der Arme (21) der Hebel zur Auflage kommen, indem sie die Riegel (10, 11) in Vorsprung halten.

6. Konsole (1) nach einem der Ansprüche 4 oder 5, **dadurch gekennzeichnet, dass** das Ende der Riegel (10, 11) gerundet ist.

7. Konsole (1) nach einem der Ansprüche 1 und 4 bis 6, **dadurch gekennzeichnet, dass** das Entriegelungselement (13) um eine im Wesentlichen vertikale Mittenachse (48) schwenkt.

8. Konsole (1) nach Anspruch 1, **dadurch gekennzeichnet, dass** das Steuerelement (12) von dem Druckknopf (7) betätigt wird, dessen Innenrand (7c) in direkter Berührung auf der Kante der Arme (21) der Hebel der Riegel (10, 11) des Entriegelungselements (13), die schwenken und die Riegel (10, 11) der Armlehnen (2, 3) freigeben, zusammenwirken kommt, was deren Öffnen bewirkt.

9. Konsole (1) nach einem der Ansprüche 1 bis 8, **dadurch gekennzeichnet, dass** sie zwei Armlehnen (2, 3), die auf der Mittenachse der Konsole (1) bündig sind, umfasst.

10. Kraftfahrzeug, das eine Innenraumkonsole für ein Fahrzeug umfasst, die eine Aufnahme (16) und mindestens eine Armlehne (2, 3), die angelenkt und verriegelt ist, nach einem der Ansprüche 1 bis 9 umfasst.

## Claims

1. A console (1) of a passenger compartment for a vehicle comprising a container (16) and at least one arm rest (2, 3) articulated on the edge of the frame of said container (16), the arm rest (2, 3) being locked in order to close the console (1), **characterized in that** it includes a compact mechanism (6) mounted on a support (26) integral with the frame (4) including a control element (12) able to cooperate by direct contact with an element (13) for unlocking the arm rest (2, 3), and **in that** the control element (12) of the mechanism (6) integrates a push button (7) mounted between an end of the lever arms (20), the other end comprising a sleeve (22) able to pivot about an axis (27) connected to the support (26).

2. The console (1) according to Claim 1, **characterized in that** the control element (12) pivots about a substantially vertical median axis (47).

3. The console (1) according to any one of Claims 1 or 2, **characterized in that** the control element (12) comprises a heel (29) constituted by an extension of the lever arm (20) at a right angle providing a positive stop under the force of a compression spring (30) for disposing the push button (7) in an operating position.

4. The console (1) according to Claim 1, **characterized in that** the unlocking element (13) of the mechanism is constituted by the lever arms (21) at the end which latches (10, 11) are formed, secured on a horizontal axis (27) articulated in bearings of the support (26).

5. The console (1) according to Claim 4, **characterized in that** the unlocking element (13) comprises a hairpin spring (28), one branch (28c) of which is in tension on an edge of the support (26) and at the rear two branches (28a, 28b) come to rest on the section (21a) of the lever arms (21) keeping the latches (10, 11) projecting.

6. The console (1) according to any one of Claims 4 or 5, **characterized in that** the end of the latches (10, 11) is rounded.

7. The console (1) according to any one of Claims 1 and 4 to 6, **characterized in that** the unlocking element (13) pivots about a substantially vertical median axis (48).

8. The console (1) according to Claim 1, **characterized in that** the control element (12) is actuated by the push button (7), the internal edge (7c) of which comes to cooperate in direct contact on the section of the arms (21) of the levers of the latches (10, 11) of the unlocking element (13) which pivot and release the latches (10, 11) of the arm rests (2, 3) causing their opening.

9. The console (1) according to any one of Claims 1 to 8, **characterized in that** it comprises two arm resets (2, 3) flush with the median axis of the console (1).

10. A motor vehicle including a passenger compartment console for a vehicle comprising a container (16) and at least one articulated and locked arm rest (2, 3), according to any one of Claims 1 to 9.
